# EUROPÄISCHE PATENTSCHRIFT

(11) **EP 3 858 723 B1**
(45) Veröffentlichungstag und Bekanntmachung des Hinweises auf die Patenterteilung: **27.03.2024**
(21) Anmeldenummer: 20154902.9
(22) Anmeldetag: 31.01.2020
(51) Int. Cl.: B62K 3/00, B62K 15/00

(54) **TRETROLLER MIT RADKASTEN**
SCOOTER WITH WHEEL BOX
TROTTINETTE À COUVRE-ROUE

(43) Veröffentlichungstag der Anmeldung: 04.08.2021
(73) Patentinhaber: Ponticelli, Pius, 4616 Kappel (CH)
(72) Erfinder: Ponticelli, Pius, 4616 Kappel (CH)
(74) Vertreter: Patentanwälte und Rechtsanwalt Weiß, Arat & Partner mbB

(56) Entgegenhaltungen:
- EP-A1- 2 174 860
- EP-A1- 2 204 315
- WO-A1-2006/031128
- WO-A1-2018/209849
- CN-U- 204 659 899
- KR-A- 20160 046 425

## Beschreibung

### Technisches Gebiet

Die Erfindung betrifft einen Tretroller mit Radkasten gemäss dem unabhängigen Patentanspruch.

### Stand der Technik

Tretroller sind bereits in vielfältiger Form und Ausgestaltung bekannt und gebräuchlich. So offenbart beispielsweise die US 2017 0 320 534 A1 einen klappbaren Tretroller.

Nachteilig an derartigen Tretrollern ist unter anderem, dass ein Benutzer mit seinem auf einem Trittbrett des Tretrollers stehenden Fuss oder Schuh ein Vorderrad des Tretrollers berühren kann. Dies kann zu gefährlichen Situationen führen, weil der Fuss das Vorderrad abbremsen und eine gewünschte Lenkbewegung verhindern kann.

Ein gattungsgemäßer Tretroller ist zudem aus der EP 2 174 860 A1 bekannt.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führt der Gegenstand des unabhängigen Anspruchs. Vorteilhafte Ausgestaltungen sind in den Unteransprüchen beschrieben.

Ein erfindungsgemässer Tretroller umfasst ein Trittbrett, zumindest ein Vorderrad und zumindest ein Hinterrad. Der Tretroller umfasst ferner eine Lenkstange, mittels der durch Drehung oder Neigung eine Orientierung des zumindest einen Vorderrads zum Zweck der Fahrtrichtungs-Änderung variiert werden kann. Das Trittbrett ist mit der Lenkstange über ein Gelenk verbunden, wobei das Gelenk die Einstellung von - und vorzugsweise auch die Fixierung in - zumindest zwei Positionen ermöglicht. In einer ersten Position steht das Trittbrett in etwa rechtwinklig zur Lenkstange. In einer zweiten Position ist das Trittbrett in Richtung auf die Lenkstange hin geklappt. Vorzugsweise ist in zumindest einer der Positionen eine Fixierung möglich, was weiter unten erläutert wird.

Der erfindungsgemässe Tretroller umfasst ferner einen Radkasten, welcher das zumindest eine Vorderrad zumindest teilweise aufnimmt, wobei die Lenkstange, vorzugsweise von oben, in den Radkasten eintritt oder mit diesem verbunden ist. Der Radkasten stellt eine räumliche Barriere bereit zwischen einem Radkasten-Innenraum, in welchem das zumindest eine Vorderrad drehbar oder neigbar gelagert ist, und einem Raum, welchen ein auf dem Trittbrett stehender Benutzer des Tretrollers während der Fahrt einnimmt. Zur Ausbildung dieser Barriere umfasst der Radkasten zumindest einen ersten Wandabschnitt, welcher bei einer Geradeausfahrt des Tretrollers einer Lauffläche des zumindest einen Vorderrads zugewandt ist. Der erste Wandabschnitt verläuft im Wesentlichen von der Lenkstange zum Trittbrett.

Bei der Verbindung zwischen Radkasten und Lenkstange kann es sich um verschiedene Verbindungen handeln. Einerseits kann die Verbindung keinen Freiheitsgrad der Bewegung zulassen. Dies kann der Fall sein, wenn beispielsweise ein Lenken durch Neigen der Lenkstange erfolgt wie nachstehend beschrieben. Alternativ kann auch bei einem Ausführungsbeispiel, bei welchem das Lenken durch Neigen erfolgt, zumindest ein Freiheitsgrad der Bewegung verbleiben, so dass die Lenkstange relativ zum Radkasten in zumindest einer Ebene oder um zumindest eine Achse bewegbar bzw. drehbar oder neigbar ist. Entsprechendes gilt für Tretroller, bei denen ein Lenken in der Art eines Fahrradlenkers erfolgt. Hierbei verfügt die Lenkstange gegenüber dem Radkasten vorzugsweise um einen Freiheitsgrad der Rotation, wobei die Rotationsachse mit einer Längsachse der Lenkstange zusammenfällt. Natürlich können auch zwei oder mehr Freiheitsgrade der Bewegung zwischen Radkasten und Lenkstange erlaubt sein, wobei noch immer eine Verbindung zwischen Radkasten und Lenkstange vorliegt. Wesentlich für die Verbindung ist, dass zumindest ein Freiheitsgrad der Bewegung (Rotation oder Translation) des Radkastens relativ zur Lenkstange oder umgekehrt verhindert ist. In bevorzugten Ausführungsbeispielen sind nur ein oder zwei Freiheitsgrade der Bewegung, vorzugsweise ein rotatorischer und/oder ein translatorischer, zwischen Radkasten und Lenkstange erlaubt.

Die Lenkstange kann beispielsweise eine relativ zum Trittbrett drehbare Stange sein, die in der Art eines Fahrradlenkers funktioniert. Alternativ kann der Tretroller auch so eingerichtet sein, dass ein Lenken durch Neigen oder Drücken der Lenkstange nach aussen, vorzugsweise verbunden mit einer Gewichtsverlagerung des Benutzers, ohne jegliche Rotation erfolgt. Ein Gefährt mit einer solchen Lenkung, welches im Rahmen der vorliegenden Anmeldung auch unter den Oberbegriff "Tretroller" gefasst wird, ist beispielsweise unter dem Markennamen "Kickboard" durch die Firma Micro Mobility Systems AG bekannt gemacht worden. Hierbei bewirkt die Neigung oder Gewichtsverlagerung des Benutzers eine Drehung der zwei Vorderräder, was wiederum die Lenkbewegung bewirkt.

Wie nachstehend noch genauer erläutert, kann die Verbindung zwischen der Lenkstange und dem Trittbrett über das Gelenk direkt oder indirekt erfolgen. Unter "Verbindung" wird hierbei verstanden, dass die Lenkstange relativ zum Trittbrett vorzugsweise nur einen oder wenige Freiheitsgrade der Bewegung aufweist. So kann die Verbindung beispielsweise derart gestaltet sein, dass die Lenkstange relativ zum Trittbrett ausschliesslich den Freiheitsgrad der Rotation um ihre Längsachse besitzt, wie dies von Fahrrädern her bekannt ist. Alternativ kann die Verbindung beispielsweise derart gestaltet sein, dass die Lenkstange relativ zum Trittbrett im Wesentlichen orthogonal zu einer Geradeaus-Fahrtrichtung neigbar ist.

Die erste Position kann als Betriebslage betrachtet werden, d.h. ein Benutzer kann in dieser ersten Position auf den Tretroller aufsteigen und mit diesem fahren. Natürlich kann aus konstruktiven, Design- oder fahrtechnischen Gründen auch daran gedacht sein, von einem exakten 90°-Winkel zwischen Trittbrett und Lenkstange abzuweichen. Eine "in etwa" rechtwinklige Anordnung zwischen Lenkstange und Trittbrett kann durchaus auch Abweichungen um mehrere Grad vom rechten Winkel umfassen. So kann beispielsweise das Trittbrett geneigt sein, was selbst dann, wenn die Lenkstange in Betriebslage gegenüber der Fahrbahn exakt rechtwinklig angeordnet ist, einen derart abweichenden Winkel bewirkt. Gemäss der vorliegenden Erfindung kann "in etwa rechtwinklig" beispielsweise einen Winkel zwischen 70° und 100° umfassen, vorzugsweise einen Winkel zwischen 80° und 95° und noch bevorzugter einen Winkel zwischen 80° und 90°.

Die zweite Position ist der zusammengeklappte bzw. Nicht-Betriebs-Zustand. Es ist bekannt, Tretroller zum Verstauen und Transportieren in einem Rucksack, Automobil oder dergleichen zusammenzuklappen. Im zusammengeklappten Zustand verlaufen die Lenkstange und das Trittbrett in etwa parallel, jedenfalls sind ihre Längsachsen nur geringfügig zueinander geneigt.

Vorzugsweise kann der Tretroller in beiden Positionen, d.h. in der vorbeschriebenen ersten und zweiten Position, fixiert werden.

Indem er von der Lenkstange zum Trittbrett verläuft, bewirkt der erste Wandabschnitt, dass ein Fuss oder Schuh des Benutzers nicht mit dem zumindest einen Vorderrad kollidieren kann. Wenn er seinen Fuss versehentlich zu weit vorne auf dem Trittbrett platziert, stösst der Benutzer mit seinem Fuss lediglich an den ersten Wandabschnitt des Radkastens. Dadurch wird verhindert, dass der Fuss beispielsweise eine Lenkbewegung behindert, das Vorderrad abbremst, oder auf sonstige unerwünschte Weise mit dem Vorderrad interagiert, was zu gefährlichen Situationen bei der Fahrt führen kann.

Das Gelenk zwischen Trittbrett und Lenkstange kann von miteinander gelenkig verbundenen Abschnitten des Trittbretts und des Radkastens gebildet werden. Die Verbindung zwischen Trittbrett und Lenkstange ist in diesem Fall indirekt und erfolgt über den Radkasten.

Das Trittbrett kann einen Verbindungsabschnitt umfassen, welcher über zumindest einen Drehpunkt oder zumindest eine Drehachse mit dem Radkasten verbunden ist. Hierbei kann insbesondere an genau zwei seitliche Drehpunkte am Radkasten gedacht sein. Der Verbindungsabschnitt ist vorzugsweise ein gabelartiger Abschnitt. Der Verbindungsabschnitt bzw. der gabelartige Abschnitt kein ein Teil des Trittbretts und somit einstückig mit diesem gefertigt sein. Der Verbindungsabschnitt bzw. der gabelartige Abschnitt kann aber auch ein gesondertes Bauteil sein, welches mit dem Trittbrett verbunden ist.

Der erfindungsgemässe Radkasten des Tretrollers umfasst zwei Wandabschnitte, welche das zumindest eine Vorderrad seitlich zumindest teilweise umfangen.

Der Radkasten kann im Allgemeinen ein- oder mehrstückig ausgebildet sein. Die vorgenannten ersten und zweiten Wandabschnitte können also beispielsweise separat oder in einem Stück gefertigt werden. Wesentlich für den Radkasten ist lediglich der oben beschriebene erste Wandabschnitt. Das oben ebenfalls beschriebene Gelenk kann natürlich auch seitlich am ersten Wandabschnitt vorgesehen sein, die seitlichen zweiten Wandabschnitte sind daher optional.

Der Tretroller kann zumindest eine Rastierung aufweisen, welche an dem Radkasten und/oder an einem dem Radkasten zugewandten Abschnitt des Trittbretts angebracht ist, um das Trittbrett gegenüber dem Radkasten in zumindest einer Position reversibel zu fixieren. Insbesondere kann über eine geeignete Rastierung eine reversible Fixierung in der vorbeschriebenen ersten und/oder zweiten Position erfolgen. Ist eine Fixierung in nur einer einzigen Position möglich, so handelt es sich hierbei vorzugsweise um die vorbeschriebene erste Position.

Jede Variante der vorbeschriebenen Rastierung, von denen einige nachstehend näher erläutert werden, bewirkt folgenden Vorteil: Die Rastierung kann sehr einfach gehalten werden, da der Radkasten und der ihm zugewandte Abschnitt des Trittbretts direkt benachbart und relativ zueinander beweglich gelagert sind. Vorzugsweise ist die räumliche Form des Radkastens, zumindest jedoch die räumliche Form des ersten Wandabschnitts so gewählt, dass bei einer Bewegung des Trittbretts um das Gelenk relativ zum Radkasten der Abstand zwischen dem ersten Wandabschnitt und dem ihm zugewandten Abschnitt des Trittbretts im Wesentlichen gleich bleibt. Somit ist sichergestellt, dass beispielsweise ein als Rastierung dienender Stift, welcher am Trittbrett bzw. an dessen Verbindungsabschnitt befestigt ist, in mehrere Sacklöcher auf dem ersten Wandabschnitt eingreifen und damit eine Fixierung bewirken kann. Dies gilt natürlich analog auch für andersartig gestaltete Rastierungen.

Der Radkasten, welcher zumindest einen ersten Wandabschnitt umfasst, bewirkt also in jedem Ausführungsbeispiel der vorliegenden Erfindung den Vorteil, dass ein Fuss oder Schuh des Benutzers nicht mit dem Vorderrad kollidieren kann, wodurch das Vorderrad gebremst und/oder in einer Lenkbewegung gehindert werden könnte. In bevorzugten Ausführungsbeispielen stellt der Radkasten oder zumindest der erste Wandabschnitt eine Fläche bereit, auf der zumindest eine Rastierung zur Fixierung einer Position befestigt sein kann.

Der dem Radkasten zugewandten Abschnitt des Trittbretts kann also der Verbindungsabschnitt bzw. der gabelartige Abschnitt sein.

Die Rastierung selbst kann beliebig ausgestaltet sein. Es kann an Bolzen, Widerlager, Pins oder dergleichen gedacht sein, welche eine form- undloder kraftschlüssige Fixierung erlauben.

Die Rastierung kann ein- oder zweiteilig sein. Das heisst, die Rastierung kann entweder nur an dem Trittbrett oder nur an dem Radkasten angebracht sein, und eine beispielsweise formschlüssige Fixierung erlauben (einteilige Rastierung). Die Rastierung kann alternativ auch zweiteilig sein und aus zwei zueinander komplementären oder miteinander in Wirkverbindung bringbaren Teilen bestehen, von denen ein Teil am Radkasten und der korrespondierende Teil am Trittbrett angebracht ist. Die Wirkverbindung beider Teile beruht hierbei vorzugsweise auf den Prinzipien von Kraft- und/oder Formschluss.

Eine einteilige Rastierung kann beispielsweise ein federkraftbeaufschlagter Bolzen sein, welcher in eine Position bringbar ist, die durch Formschluss zumindest eine Position des Trittbretts relativ zur Lenkstange und somit auch zum Radkasten festlegen kann oder umgekehrt. Der Bolzen kann beispielsweise eine Bewegung der Lenkstange relativ zum Trittbrett durch Formschluss verhindern, indem er in der gewählten ersten und/oder zweiten Position derart positioniert ist, dass er einer Bewegung des Radkastens und somit auch der Lenkstange relativ zum Trittbrett "im Weg steht". Eine solche einteilige Rastierung, beispielsweise ein Bolzen am gabelartigen Abschnitt, benötigt keine korrespondierende Rastierung als Gegenlager auf dem ersten Wandabschnitt sondern steht einer Drehbewegung des ersten Wandabschnitts relativ zum Trittbrett schlicht "im Weg".

Eine zweiteilige Rastierung kann beispielsweise einen federkraftbeaufschlagten Stift am Trittbrett und ein korrespondierendes Loch oder Sackloch am Radkasten umfassen oder umgekehrt. Ein solches Loch oder Sackloch kann als Gegenlager dienen. Auch Nut-Feder-Verbindungen sind denkbar.

Selbstverständlich kann auch an andere form- oder kraftschlüssige Verbindungen gedacht sein, beispielsweise an Schnellverschlüsse, Schrauben, etc.

Neben den einteiligen und zweiteiligen Rastierungen kann auch daran gedacht sein, dass beispielsweise einem einzigen auf dem Radkasten (oder dem Trittbrett) angebrachten Stift zwei Sacklöcher oder Löcher auf dem Trittbrett (oder dem Radkasten) zugeordnet sind. Im Gegensatz zu den vorstehend beschriebenen zweiteiligen Rastierungen, bei denen jeweils genau einem Teil auf dem Radkasten genau ein Teil auf dem Trittbrett oder dem Verbindungsabschnitt zugeordnet war, können also auch einem einzigen Teil auf dem Verbindungsabschnitt bzw. dem Trittbrett zwei oder mehr Teile auf dem Radkasten zugeordnet sein.

Der Stift oder im Allgemeinen das Teil der Rastierung auf dem Trittbrett kann dann mit jedem der korrespondierenden Teile der Rastierung auf dem Radkasten in Wirkverbindung gebracht bzw. eingerastet werden. Dasselbe gilt natürlich auch für einen einzigen Stift auf dem Radkasten und zwei (Sack)Löcher auf dem Trittbrett und für jede andere zweiteilige Rastierung. Vorzugsweise erlaubt die Rastierung eine Fixierung in genau zwei Positionen, nämlich in der Betriebslage und in dem zusammengeklappten Nicht-Betriebszustand. Es kann aber auch an Rastierungen gedacht sein, welche eine Fixierung in genau einer Position oder in mehr als zwei Positionen erlauben.

Die Rastierung ist am zweiten Wandabschnitt des Radkastens befestigt. Ist ein gabelartiger Abschnitt vorhanden und sind die Rastierungen bzw. die Teile einer zweiteiligen Rastierung an den seitlichen zweiten Wandabschnitten des Radkastens befestigt, so können diese paarweise oder einzeln vorhanden sein. Es ist also möglich, aber nicht zwingend nötig, dass auf beiden seitlichen Wandabschnitten spiegelsymmetrische Rastierungen oder Teile einer Rastierung vorhanden sind.

Eine Fixierung in einer der vorbeschriebenen Positionen kann mit genau einer ein- oder zweiteiligen Rastierung erfolgen. Es ist aber auch denkbar, eine Fixierung in einer der vorbeschriebenen Positionen mit mehreren ein- oder zweiteiligen Rastierungen zu gewährleisten. Eine Redundanz ist hierbei durchaus sinnvoll, um die Sicherheit zu erhöhen und ein unerwünschtes Verlassen der Position nach der Fixierung zu verhindern.

Ein Lösen der Fixierung bzw. ein Lösen der Rastierung kann auf bekannte Weise erfolgen. So kann beispielsweise die Kraft, mit welcher eine kraftschlüssig wirkende Rastierung die Fixierung ermöglicht, durch Krafteinwirkung eines Benutzers überwunden werden. Wird die Fixierung durch eine formschlüssig wirkende Rastierung gewährleistet, kann der Formschluss durch einen Benutzer gelöst werden.

### Figurenbeschreibung

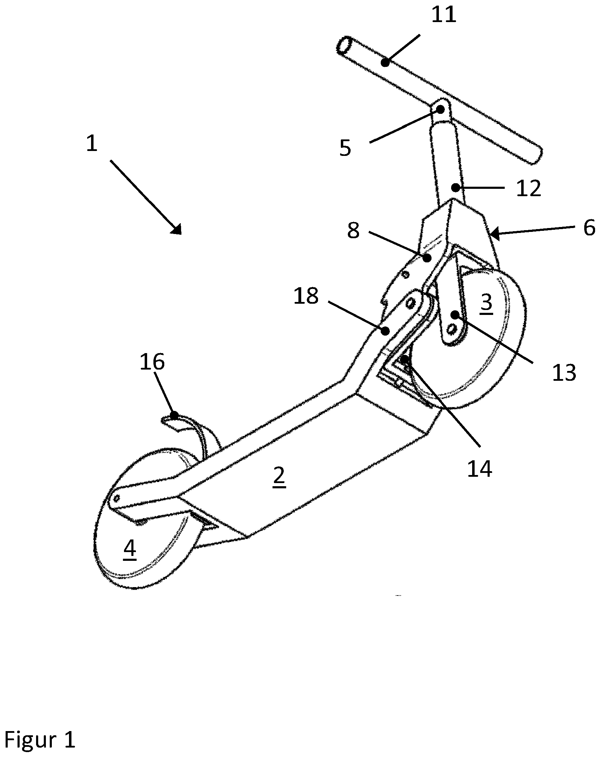

Weitere Vorteile, Merkmale und Einzelheiten der Erfindung ergeben sich aus der nachfolgenden Beschreibung eines bevorzugten Ausführungsbeispiels sowie anhand der Zeichnungen. Diese zeigen in den Figuren 1 bis 3 verschiedene Ansichten eines Ausführungsbeispiels der vorliegenden Erfindung.

### Ausführungsbeispiel

In Figur 1 ist ein Tretroller 1 gemäss einem Ausführungsbeispiel der vorliegenden Erfindung in einer ersten perspektivischen Ansicht gezeigt.
In Figur 2 ist der Tretroller nach Figur 1 in einer zweiten perspektivischen Ansicht gezeigt.
In Figur 3 ist der Tretroller 1 nach den Figuren 1 und 2 in einer teilweise geschnittenen Seitenansicht gezeigt.

Der Tretroller 1 umfasst ein Trittbrett 2, an welchem ein Hinterrad 4 befestigt ist, über dem ein Schutzblech 16 angeordnet ist.

Andernends mündet das Trittbrett 2 in einen gabelartigen Abschnitt 18, der über zwei Drehpunkte 9 mit einem Radkasten 6 verbunden ist. Aus perspektivischen Gründen ist hierbei nur einer der symmetrisch angeordneten Drehpunkte 9 sichtbar.

Der Radkasten 6 ist mit einem Lenkstangengehäuse 12 verbunden.

Eine Lenkstange 5 verläuft in dem Lenkstangengehäuse 12. Die Lenkstange 5 umfasst an ihrem oberen Ende einen Lenker 11 und ist am unteren Ende über eine Radgabel 13 mit einem Vorderrad 3 verbunden. Das Vorderrad 3 ist teilweise im Radkasten 6 aufgenommen.

Der Radkasten 6 umfasst einen ersten Wandabschnitt 7 und zwei seitliche zweite Wandabschnitte 8. Der Radkasten 6 umfasst Öffnungen 15.

Die Wandabschnitte 7, 8 des Radkastens 6 definieren einen Radkasten-Innenraum 14, in welchem das Vorderrad 3 zumindest teilweise aufgenommen ist.

An den Wandabschnitten 7, 8 und an dem gabelartigen Abschnitt 18 sind Rastierungen 10 vorgesehen.

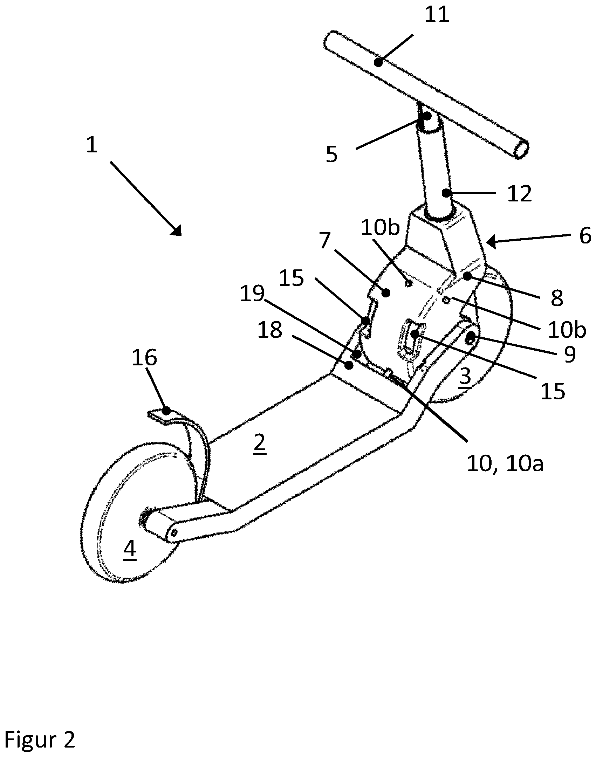

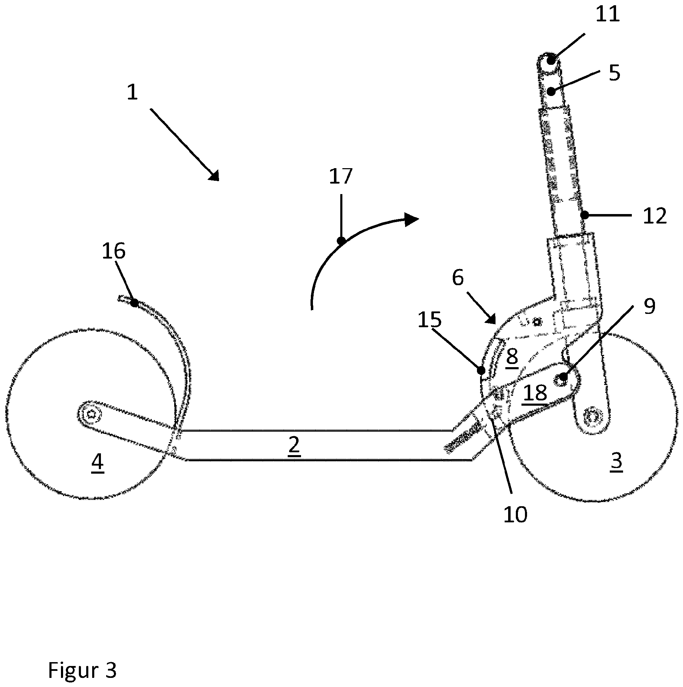

In den Figuren 2 und 3 ist besonders gut erkennbar, dass der erste Wandabschnitt 7 von der Lenkstange 5 zum Trittbrett 2 verläuft und eine Barriere zwischen dem (nicht gezeigten) Benutzer und dem Vorderrad 3 darstellt.

Bezugnehmend auf die Figuren 1 bis 3 erklärt sich die Funktionsweise des erfindungsgemässen Tretrollers 1 folgendermassen:
Zum Fahren stellt sich der Benutzer mit zumindest einem Fuss oder Schuh auf das Trittbrett 2 und steuert den Tretroller 1 mit Hilfe des Lenkers 11, welcher für eine Drehung der Radgabel 13 innerhalb des Radkastens 6 sorgt und somit eine Fahrtrichtung bestimmt. Eine Drehung des Lenkers 11 bewirkt eine Drehung der Lenkstange 5 innerhalb des Lenkstangengehäuses 12. Da die Lenkstange 5 in der Radgabel 13 mündet, wird über den Lenker 11 direkt das Vorderrad 3 gedreht.

Das Schutzblech 16 wirkt als Bremse, wenn es durch den Fuss oder Schuh des Benutzers auf das Hinterrad 4 gedrückt wird.

Im Gegensatz zu bekannten Tretrollern besteht beim Tretroller 1 nicht die Gefahr, dass ein Fuss oder Schuh des Benutzers mit dem Vorderrad 3 in Kontakt tritt und dieses verlangsamt oder in der Lenkbewegung einschränkt oder eine unerwünschte Lenkbewegung veranlasst. All dies kann zu Unfällen führen.

Platziert der Benutzer einen Fuss oder Schuh zu weit vorne auf dem Trittbrett 2, so stösst er lediglich an den ersten Wandabschnitt 7 des Radkastens 6. Ein Kontakt zwischen dem Fuss des Benutzers und dem Vorderrad 3 kann daher nicht stattfinden, gefährliche Situationen werden verhindert.

Der gabelartige Abschnitt 18 bildet gemeinsam mit den beiden symmetrisch an den zweiten Wandabschnitten 8 angeordneten Drehpunkten 9 und dem Radkasten 6 ein Gelenk.

Dieses Gelenk erlaubte eine Bewegung des Trittbretts 2 in Richtung eines Pfeils 17 in Figur 3.

In den Figuren 1 bis 3 ist der Tretroller 1 in einer ersten Position gezeigt, die als Betriebslage bezeichnet werden kann. Der Benutzer kann mit dem Tretroller 1 fahren. Ein Winkel zwischen Trittbrett 2 und Lenkstange 5 beträgt knapp 90°.

Wird das Trittbrett 2 entlang des Pfeils 17 zur Lenkstange 5 hin geklappt, befindet sich der Tretroller 1 in einer zweiten Position, die beispielsweise den platzsparenden Transport des Tretrollers 1 erlaubt. Ein Zurückklappen entgegen Pfeilrichtung 17 ist natürlich möglich.

Die Rastierungen 10, 10a, 10b erlauben die Fixierung in der ersten Position, welche in den Figuren 1 bis 3 dargestellt ist sowie in der (nicht gezeigten) eingeklappten bzw. zweiten Position.

Der in den Figuren 1 bis 3 gezeigte Tretroller 1 umfasst erste bzw. untere Rastierungen 10a und zweite bzw. obere Rastierungen 10b an dem Radkasten 6. Hierbei handelt es sich jeweils um zweiteilige Rastierungen 10, wobei die Rastierungen 10a, 10b am Radkasten 6 Vertiefungen bzw. Sacklöcher sind. Hierbei sind mehrere obere Rastierungen 10b (erkennbar in Figur 2) in Form von Sacklöchern 10b vorhanden, welche mit mehreren Stiften 10 am gabelartigen Abschnitt 18 zwecks Fixierung in der zweiten Position wechselwirken können. In Figur 2 ist aus perspektivischen Gründen nur einer der Stifte 10 am gabelartigen Abschnitt 18 erkennbar. Da mehrere Rastierungen 10, 10b die Fixierung in der ersten Position ermöglichen, liegt hier eine gewünschte Redundanz vor. Sollte eine Rastierung 10, 10b beschädigt sein, so kann eine der anderen Rastierungen 10, 10b dennoch eine sicherer Fixierung gewährleisten. Dasselbe gilt analog für die unteren Rastierungen 10, 10a.

Der gabelartige Abschnitt 18 umfasst eine Rastierung 10 in Form eines federkraftvorbelasteten Stiftes 10, der in Figur 3 erkennbar ist. In Figur 2 ist erkennbar, dass dieser Stift 10, welcher in das Sackloch 10a eingreift, an demjenigen Abschnitt des Trittbretts 2 befestigt ist, welcher dem ersten Wandabschnitt 7 zugewandt ist. Dieser Stift 10 ist derart federkraftvorbelastet, dass er sich in Richtung auf den Radkasten 6 zu bewegt und durch die Wirkung der Federkraft in die als Vertiefungen ausgebildeten Rastierungen 10a (unten) und 10b (oben) eingreifen kann.

Überwindet der Benutzer die Federkraft, beispielsweise durch Drücken des Trittbretts 2 in Richtung des Pfeils 17, so kann der Tretroller 1 ausgehend von der in den Figuren dargestellten ersten Position in die (nicht dargestellte) zweite Position gebracht werden. Die am gabelartigen Abschnitt 18 befindliche Rastierung in Form des o.g. Stiftes 10 greift dann in die oberen Rastierungen 10b ein.

Es ist zu beachten, dass der gabelartige Abschnitt 18 neben dem in Figur 3 dargestellten Stift 10 auch noch seitliche Rastierungen umfasst, die auf Grund der gewählten Perspektiven in den Figuren 1 bis 3 nicht erkennbar sind. Jedoch sind die korrespondierenden oberen Rastierungen 10b an den zweiten Wandabschnitten 8 in den Figuren 2 (mit Bezugsziffer) und 3 (ohne Bezugsziffer) erkennbar.

Obwohl nur ein bevorzugtes Ausführungsbeispiel der Erfindung beschrieben und dargestellt wurde, ist es offensichtlich, dass der Fachmann zahlreiche Modifikationen hinzufügen kann, ohne Wesen und Umfang der Erfindung zu verlassen.

Beispielsweise können auch zwei oder mehr Vorderräder 3 vorhanden sein, wenn der Radkasten 6 entsprechend breiter gebaut ist.

Weiterhin können auch zwei oder mehr Hinterräder 4 vorhanden sein.

Die Anzahl an Vorder-und Hinterrädern 3, 4 muss nicht gleich sein.

Anstelle eines drehbaren Lenkers 11 bzw. einer drehbaren Lenkstange 5 kann auch daran gedacht sein, die Lenkstange 5 drehfest mit dem Radkasten auszubilden. Eine Neigung der Lenkstange 5 orthogonal (quer) zur Fahrtrichtung kann dann eine Fahrtrichtungsänderung bewirken. Eine solche Lenkung ist durch das Produkt bekannt, welches unter dem Markennamen "Kickboard" vertrieben wird.

Der Tretroller 1 kann muskelkraftbetrieben sein, wie in den Figuren 1 bis 3 dargestellt. Alternativ kann der Tretroller 1 auch einen Antriebsmotor umfassen, insbesondere einen Elektromotor. Derartige Elektromotoren sind bekannt und können in sehr kleiner Bauweise gefertigt sein, so dass sie den Fahrkomfort nicht beeinträchtigen.

Das Lenkstangengehäuse 12 und der Radkasten 6 können einstückig gefertigt sein. Es kann auch auf das Lenkstangengehäuse 12 verzichtet werden, wenn der Radkasten 6 dessen Funktion übernimmt, d.h. wenn er die Lenkstange 5 lagert und beherbergt. Das Lenkstangengehäuse 12 ist im Wesentlichen ein Fortsatz des Radkastens 6.

Das Schutzblech 16 ist optional, auch dessen Bremsfunktion ist optional. Auf das Schutzblech 16 kann verzichtet werden. Es kann auch durch einen (hinteren) Radkasten ersetzt werden.

Die Öffnungen 15 sind optional, der Radkasten 6 kann auch über geschlossene Wandabschnitte 7, 8 verfügen. Die Öffnungen 15 sind vorzugsweise so klein gehalten, dass weder ein Fuss oder Schuh des Benutzers noch Abschnitte des Fusses oder Schuhs mit dem Vorderrad 3 in Kontakt kommen können. Die Grösse der Öffnungen 15 kann somit beispielsweise davon abhängen, ob der Tretroller 1 für Erwachsene oder Kinder gedacht ist. Kinderfüsse bzw. Kinderschuhe passen im Zweifel auch durch kleinere Öffnungen 15, während Füsse bzw. Schuhe von Erwachsenen auch in etwas grössere Öffnungen in der Regel nicht eindringen können. Im Allgemeinen sind die Öffnungen 15 daher üblicherweise nur wenige Quadratzentimeter gross. Wesentlich bleibt aber, dass die Füsse bzw. Schuhe des Benutzers nicht durch die Öffnungen 15 in Kontakt mit dem Vorderrad 3 treten können. Dies hängt natürlich nicht nur von der lichten Fläche der Öffnung 15 ab, sondern auch von deren Form.

Anstelle der in den Figuren 1 bis 3 gezeigten Rastierungen 10, 10a, 10b kann auch an einen Tretroller 1 mit nur einer einzigen Rastierung 10, 10a, 10b gedacht sein. Es kann an Tretroller 1 mit genau einer, genau zwei oder mehr Rastierungen 10, 10a, 10b gedacht sein, wobei es sich hierbei um ein- oder zweiteilige Rastierungen 10, 10a, 10b handeln kann.

Die Trittbrett-seitigen Rastierungen 10 müssen nicht zwangsweise am gabelartigen Abschnitt 18 angebracht sein. Es kann auch auf den gabelartigen Abschnitt 18 verzichtet werden, und stattdessen ein alternativer Verbindungsabschnitt benutzt werden. Die Trittbrett-seitigen Rastierungen 10 können dann an irgendeinem Abschnitt des Trittbretts 2 befestigt sein, welcher dem Radkasten 6 zugewandt ist.

Vorzugsweise ist der Tretroller 1 so gestaltet, dass ein in Figur 2 erkennbarer Spalt 19 zwischen dem gabelartigen Abschnitt 18 und dem ersten Wandabschnitt 7 bei einer Bewegung des Trittbretts 2 entlang des Pfeils 17 (vgl. Fig. 3) um die als Gelenk wirkenden Drehpunkte 9 über die gesamte Drehbewegung hinweg konstant bleibt, also nicht grösser oder kleiner wird. Dies kann bewirkt werden, indem ein Radius des gekrümmten ersten Wandabschnitts 7 demjenigen Radius entspricht, welcher von dem gabelartigen Abschnitt 18 (bzw. von einem dem ersten Wandabschnitt 7 zugewandten Teil des Trittbretts 2) beschrieben wird, wenn er um die Drehpunkte 9 rotiert. Natürlich können auch andere Formen und Gestaltungen angedacht sein. Zumindest gilt die vorbeschriebene Ausgestaltung des ersten Wandabschnitts 7 und des gabelartigen Abschnitts 18 - bzw. im Allgemeinen des Verbindungsabschnitts bzw. des dem ersten Wandabschnitt 7 zugewandten Abschnitts des Trittbretts 2 - jedoch vorzugsweise für diejenigen Bereiche beider Bauteile 7, 18, welche die Rastierungen 10, 10a, 10b tragen.

Ferner ist zu beachten, dass einige Merkmale absichtlich nicht in allen Figuren 1 bis 3 mit Bezugsziffern versehen wurden. Damit soll sichergestellt werden, dass Merkmale nicht durch Bezugspfeile oder Bezugsziffern verdeckt werden. So sind beispielsweise die in den Figuren 1 und 3 sichtbaren Rastierungen absichtlich nicht mit Bezugsziffern versehen.

### Bezugszeichenliste

| | | | | | |
|---|---|---|---|---|---|
| 1 | Tretroller | 34 | | | |
| 2 | Trittbrett | 35 | | | |
| 3 | Vorderrad | 36 | | | |
| 4 | Hinterrad | 37 | | | |
| 5 | Lenkstange | 38 | | | |
| 6 | Radkasten | 39 | | | |
| 7 | Erster Wandabschnitt | 40 | | | |
| 8 | Zweiter Wandabschnitt | 41 | | | |
| 9 | Drehpunkt | 42 | | | |
| 10 | Rastierung | 43 | | | |
| 11 | Lenker | 44 | | | |
| 12 | Lenkstanqenqehäuse | 45 | | | |
| 13 | Radgabel | 46 | | | |
| 14 | Radkasten-Innenraum | 47 | | | |
| 15 | Öffnungen | 48 | | | |
| 16 | Schutzblech/Bremse | 49 | | | |
| 17 | Pfeil | 50 | | | |
| 18 | Gabelartiger Abschnitt | 51 | | | |
| 19 | Spalt | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Tretroller (1) mit einem Trittbrett (2), zumindest einem Vorderrad (3) und zumindest einem Hinterrad (4),
der Tretroller (1) umfassend eine Lenkstange (5), mittels der durch Drehung oder Neigung eine Orientierung des zumindest einen Vorderrads (3) zum Zweck der Fahrtrichtungs-Änderung variiert werden kann,
wobei das Trittbrett (2) mit der Lenkstange (5) über ein Gelenk verbunden ist,
wobei das Gelenk die Einstellung von zumindest zwei Positionen ermöglicht,
wobei in einer ersten Position das Trittbrett (2) in etwa rechtwinklig zur Lenkstange (5) steht, und
wobei in einer zweiten Position das Trittbrett (2) in Richtung auf die Lenkstange (5) hin geklappt ist, mit einen Radkasten (6), welcher das zumindest eine Vorderrad (3) zumindest teilweise aufnimmt,
wobei die Lenkstange (5) in den Radkasten (6) eintritt oder mit diesem verbunden ist,
wobei der Radkasten (6) eine räumliche Barriere bereitstellt zwischen einem Radkasten-Innenraum (14), in welchem das zumindest eine Vorderrad (3) drehbar oder neigbar gelagert ist, und einem Raum, welchen ein auf dem Trittbrett (2) stehender Benutzer des Tretrollers während der Fahrt einnimmt,
wobei der Radkasten (6) zur Ausbildung dieser Barriere zumindest einen ersten Wandabschnitt (7) umfasst, welcher bei einer Geradeausfahrt des Tretrollers einer Lauffläche des zumindest einen Vorderrads (3) zugewandt ist,
wobei der erste Wandabschnitt (7) im Wesentlichen von der Lenkstange (5) zum Trittbrett verläuft, wobei
der Radkasten (6) ferner zweite Wandabschnitte (8) umfasst, welche das zumindest eine Vorderrad (3) seitlich zumindest teilweise umfangen, **dadurch gekennzeichnet, dass**
der Tretroller (1) ferner zumindest eine Rastierung (10, 10a, 10b) an zumindest einem der zweiten Wandabschnitte (8) umfasst, um das Trittbrett (2) gegenüber dem Radkasten (6) in zumindest einer Position reversibel zu fixieren.

2. Tretroller (1) nach Anspruch 1, **dadurch gekennzeichnet, dass** das Gelenk zwischen Trittbrett (2) und Lenkstange (5) von miteinander gelenkig verbundenen Abschnitten des Trittbretts (2) und des Radkastens (6) gebildet wird.

3. Tretroller (1) nach Anspruch 2, **dadurch gekennzeichnet, dass** das Trittbrett (2) einen gabelartigen Abschnitt (18) umfasst, welcher über zwei seitliche Drehpunkte (9) mit dem Radkasten (6) verbunden ist.

4. Tretroller (1) nach einem der Ansprüche 1 bis 3, wobei die weiterhin zumindest eine Rastierung (10, 10a, 10b) an einem dem Radkasten (6) zugewandten Abschnitt des Trittbretts (2) angebracht ist, um das Trittbrett (2) gegenüber dem Radkasten (6) in zumindest einer Position reversibel zu fixieren.

## Claims

1. Scooter (1) with a footboard (2), at least one front wheel (3) and at least one rear wheel (4),
the scooter (1) comprising a handlebar (5) by means of which an orientation of the at least one front wheel (3) can be varied by rotation or inclination for the purpose of changing the direction of travel,
wherein the footboard (2) is connected to the handlebar (5) via a joint,
wherein the joint enables the adjustment of at least two positions,
wherein in a first position the footboard (2) is approximately at right angles to the handlebar (5), and
wherein in a second position the footboard (2) is folded in the direction of the handlebar (5),
with a wheel housing (6) which at least partially accommodates the at least one front wheel (3),
wherein the handlebar (5) enters or is connected to the wheel housing (6),
wherein the wheel housing (6) provides a spatial barrier between a wheel housing interior (14), in which the at least one front wheel (3) is rotatably or inclinably mounted, and a space which a user of the scooter standing on the footboard (2) occupies during the ride,
wherein the wheel housing (6) for forming this barrier comprises at least one first wall section (7) which faces a running surface of the at least one front wheel (3) when the scooter is traveling in a straight direction,
wherein the first wall section (7) extends substantially from the handlebar (5) to the footboard,
wherein the wheel housing (6) further comprises second wall sections (8) which at least partially enclose the at least one front wheel (3) laterally,
**characterized in that**
the scooter (1) further comprises at least one detent (10, 10a, 10b) on at least one of the second wall sections (8) in order to reversibly fix the footboard (2) relative to the wheel housing (6) in at least one position.

2. Scooter (1) according to claim 1, **characterized in that** the joint between the footboard (2) and the handlebar (5) is formed by sections of the footboard (2) and the wheel housing (6) which are articulated to one another.

3. Scooter (1) according to claim 2, **characterized in that** the footboard (2) comprises a fork-like section (18) which is connected to the wheel housing (6) via two lateral pivot points (9).

4. Scooter (1) according to one of claims 1 to 3, wherein the further at least one detent (10, 10a, 10b) is attached to a section of the footboard (2) facing the wheel housing (6) in order to reversibly fix the footboard (2) relative to the wheel housing (6) in at least one position.

## Revendications

1. Trottinette (1) comportant un marchepied (2), au moins une roue avant (3) et au moins une roue arrière (4),
la trottinette (1) comprenant un guidon (5), au moyen duquel, par rotation ou inclinaison, une orientation de l'au moins une roue avant (3) peut être modifiée dans le but de changer la direction de déplacement,
dans laquelle le marchepied (2) est relié au guidon (5) par l'intermédiaire d'une articulation,
dans laquelle l'articulation permet un réglage d'au moins deux positions,
dans laquelle dans une première position, le marchepied (2) est approximativement perpendiculaire au guidon (5) et
dans laquelle dans une seconde position, le marchepied (2) est rabattu en direction du guidon (5), avec un passage de roue (6), qui reçoit au moins partiellement l'au moins une roue avant (3),
dans laquelle le guidon (5) pénètre dans le passage de roue (6) ou est relié à celui-ci,
dans laquelle le passage de roue (6) fournit une barrière spatiale entre l'espace interne de passage de roue (14), dans lequel l'au moins une roue avant (3) est montée rotative ou inclinable, et un espace, qui reçoit un utilisateur de la trottinette se trouvant debout sur le marchepied (2) pendant la conduite, dans laquelle le passage de roue (6) comprend au moins une section de paroi (7) pour la formation de cette barrière, qui lors d'une conduite en ligne droite de la trottinette, est tournée vers une surface de roulement de l'au moins une roue avant (3),
dans laquelle la première section de paroi (7) s'étend essentiellement du guidon (5) au marchepied, dans laquelle
le passage de roue (6) comprend en outre des secondes sections de paroi (8), qui entourent latéralement au moins partiellement l'au moins une roue avant (3), **caractérisée en ce que**
la trottinette (1) comprend en outre au moins un cran d'arrêt (10, 10a, 10b) sur au moins une des secondes sections de paroi (8), afin de fixer le marchepied (2) de manière réversible par rapport au passage de roue (6) dans au moins une position.

2. Trottinette (1) selon la revendication 1, **caractérisée en ce que** l'articulation entre le marchepied (2) et le guidon (5) est formée par des sections du marchepied (2) et du passage de roue (6) reliées de manière articulée les unes aux autres.

3. Trottinette (1) selon la revendication 2, **caractérisée en ce que** le marchepied (2) comprend une section (18) en forme de fourche, qui est reliée au passage de roue (6) par l'intermédiaire de deux points de pivotement latéraux (9).

4. Trottinette (1) selon l'une des revendications 1 à 3, dans laquelle l'au moins un cran d'arrêt (10, 10a, 10b) est en outre disposé sur une section du marchepied (2) tournée vers le passage de roue (6), afin de fixer de manière réversible le marchepied (2) par rapport au passage de roue (6) dans au moins une position.
